# EUROPEAN PATENT APPLICATION

(11) **EP 4 712 238 A1**
(43) Date of publication of application: **18.03.2026**
(21) Application number: 24894520.6
(22) Date of filing: 15.11.2024
(51) Int. Cl.: H01M 50/291, H01M 50/204, H01M 50/262, H01M 50/271

(54) **BATTERY PACK**

(30) Priority: 20.11.2023 KR 20230160157
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2024/018043
(87) International publication number: WO 2025/110627

(57) **Abstract**

Example embodiments provide a battery pack. The battery pack includes: a lower frame including a base plate and side walls; first to fourth battery cell assemblies provided on the lower frame and including a plurality of battery cells; a first cross beam interposed between the first and second battery cell assemblies, in which the first and second battery cells are spaced apart from each other in a first direction; a second cross beam interposed between the third and fourth battery cell assemblies, in which the third and fourth battery cell assemblies are spaced apart from the first and second battery cell assemblies in a second direction perpendicular to the first direction; first fixing parts coupled to the first cross beam and spaced apart from the base plate; and second fixing parts coupled to the first fixing parts.

## Description

### [Technical Field]

The present invention relates to a housing and a battery pack including the same. The present application claims the benefit of priority based on Korean Patent Application No. 10-2023-0160157, filed on November 20, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack with improved safety and energy density.

### [Technical Solution]

Example embodiments of the present invention provide a battery pack. The battery pack includes: a lower frame including a base plate and side walls; first to fourth battery cell assemblies provided on the lower frame and each including a plurality of battery cells; a first cross beam interposed between the first and second battery cell assemblies, in which the first and second battery cells are spaced apart from each other in a first direction; a second cross beam interposed between the third and fourth battery cell assemblies, in which the third and fourth battery cell assemblies are spaced apart from the first and second battery cell assemblies in a second direction perpendicular to the first direction; first fixing parts coupled to the first cross beam and spaced apart from the base plate; and second fixing parts coupled to the first fixing parts.

The battery pack may further include a lid coupled to the side walls.

The battery pack may further include gaskets between the second fixing parts and the lid.

Each of the second fixing parts may include a flange, the flange may include a groove with a depth less than height of each of the gaskets, and the gaskets may be in the groove.

The battery pack may further include a center bracket on the lid.

The center bracket may be coupled to the second fixing parts.

The battery pack may further include third fixing parts coupled to the second fixing parts while being in contact with the center bracket.

A first end of the center bracket may be fixed on the first cross beam, and a second end of the center bracket may be fixed on the second cross beam.

The lid may be fixed by the center bracket.

The battery pack may further include a center beam between the first and second battery cell assemblies.

The center beam may overlap the center bracket.

The center beam may be perpendicular to the center bracket.

Each of the second fixing parts may include a first shank, a flange portion with a diameter greater than a diameter of the first shank, a hexagonal portion spaced apart from the first shank with the flange portion therebetween, and a second shank spaced apart from the flange portion with the hexagonal portion therebetween.

Each of the second fixing parts may further include an adhesive applied to the first shank.

The first shank of each of the second fixing parts may be coupled to a corresponding one of the first fixing parts.

### [Advantageous Effects]

According to example embodiments of the present invention, an inner space of a battery pack to be occupied by fixing parts configured to fix a center bracket can be minimized. Accordingly, a battery pack with increased energy density can be provided.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a flowchart of a manufacturing method of a battery pack according to example embodiments.
FIG. 2 is a perspective view for describing a manufacturing method of a battery pack according to example embodiments.
FIG. 3 is an enlarged partial perspective view of a part of FIG. 2.
FIG. 4 is a cross-sectional view taken along line 3I-3I' of FIG. 3.
FIG. 5 is a cross-sectional view taken along line 3II-3II' of FIG. 3.
FIG. 6 is a perspective view for describing a manufacturing method of a battery pack according to example embodiments.
FIG. 7 is an enlarged partial perspective view of a part of FIG. 6.
FIG. 8 is a cross-sectional view taken along line 7I-7I' of FIG. 7.
FIG. 9 illustrates a second fixing part.
FIG. 10 is a perspective view for describing a manufacturing method of a battery pack according to example embodiments.
FIG. 11 is an enlarged partial perspective view of a part of FIG. 10.
FIG. 12 is a cross-sectional view taken along line 11I-11I' of FIG. 11.
FIG. 13 is a perspective view for describing a manufacturing method of a battery pack according to example embodiments.
FIG. 14 is an enlarged partial perspective view of a part of FIG. 13.
FIG. 15 is a cross-sectional view taken along line 14I-14I' of FIG. 14.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

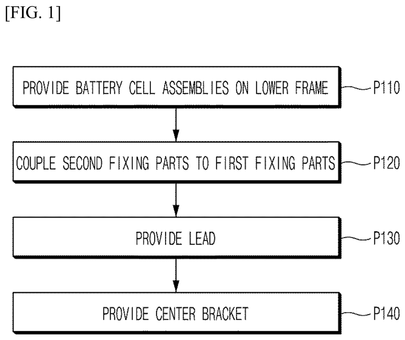

FIG. 1 is a flowchart of a manufacturing method of a battery pack according to example embodiments.

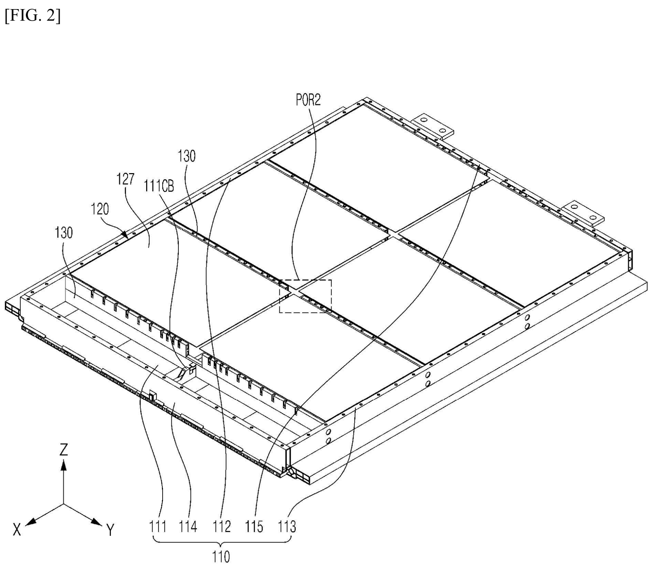

FIG. 2 is a perspective view for describing a manufacturing method of a battery pack according to example embodiments.

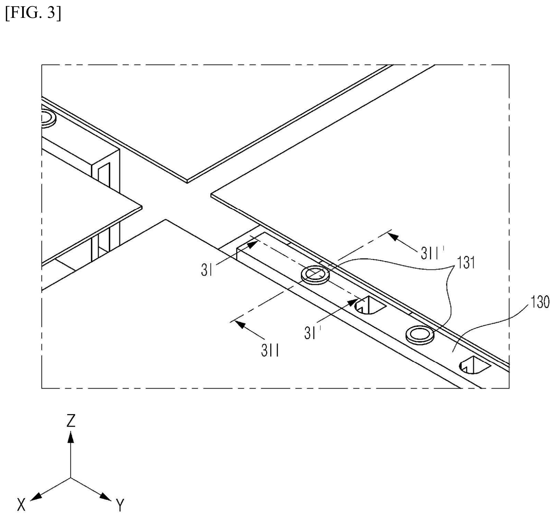

FIG. 3 is an enlarged partial cross-sectional view of a part POR2 of FIG. 2.

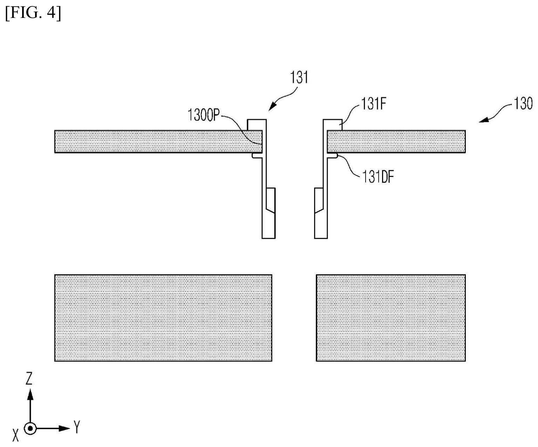

FIG. 4 is a cross-sectional view taken along line 3I-3I' of FIG. 3.

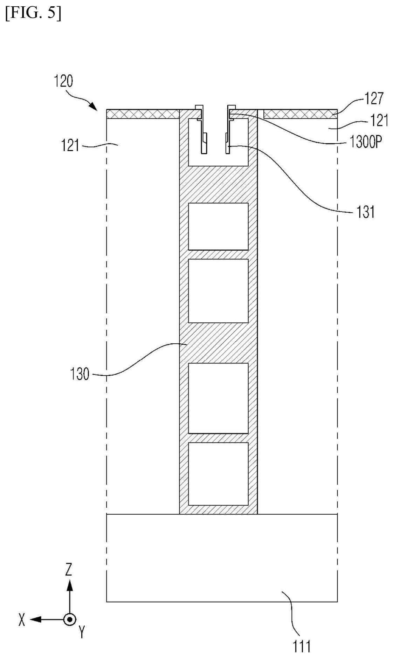

FIG. 5 is a cross-sectional view taken along line 3II-3II' of FIG. 3.

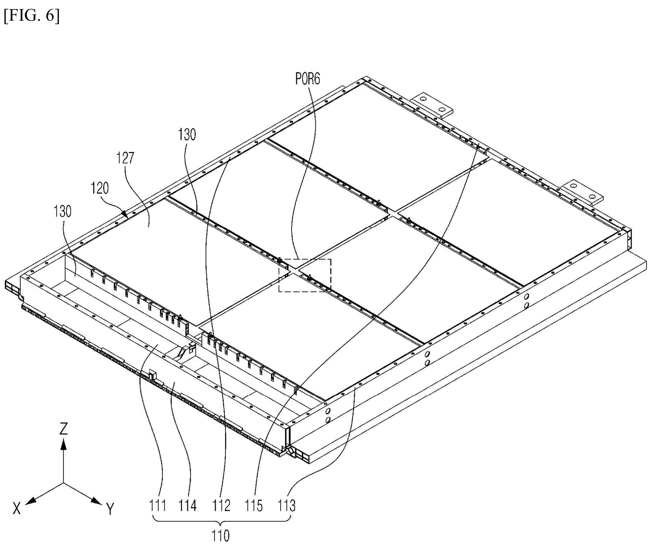

FIG. 6 is a perspective view for describing a manufacturing method of a battery pack according to example embodiments.

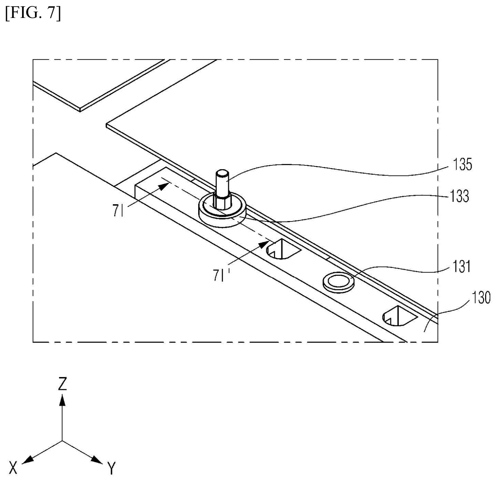

FIG. 7 is an enlarged partial perspective view of a part POR6 of FIG. 6.

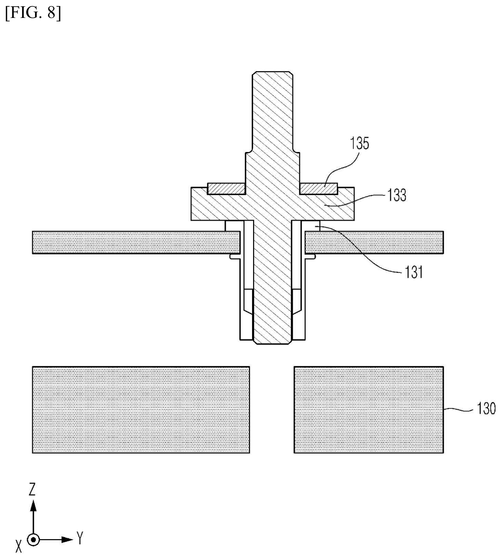

FIG. 8 is a cross-sectional view taken along line 7I-7I' of FIG. 7.

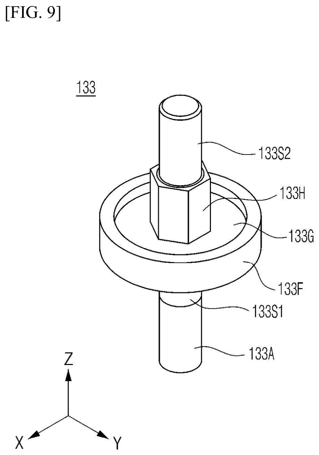

FIG. 9 illustrates a second fixing part.

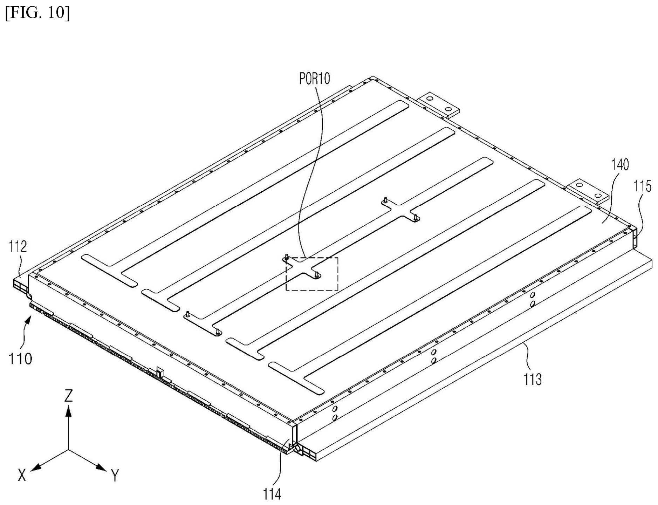

FIG. 10 is a perspective view for describing a manufacturing method of a battery pack according to example embodiments.

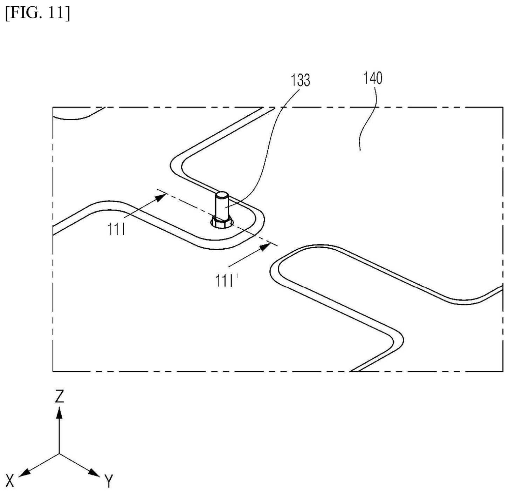

FIG. 11 is an enlarged partial perspective view of a part POR10 of FIG. 10.

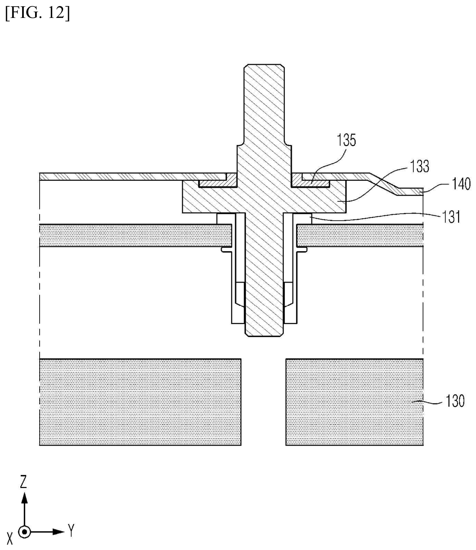

FIG. 12 is a cross-sectional view taken along line 11I-11I' of FIG. 11.

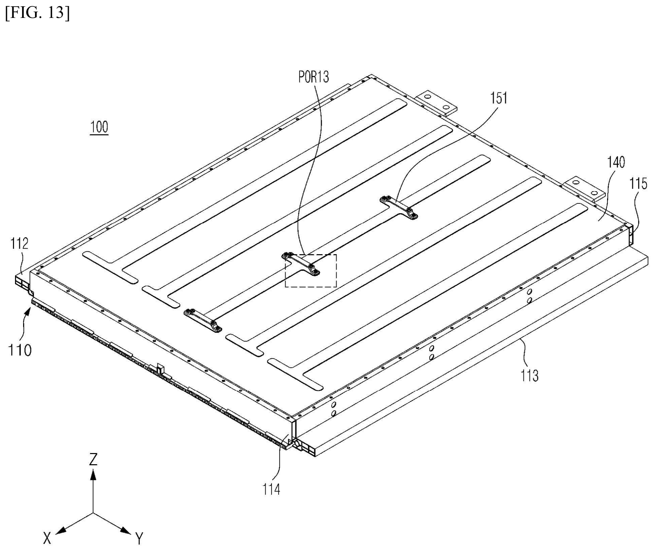

FIG. 13 is a perspective view for describing a manufacturing method of a battery pack according to example embodiments.

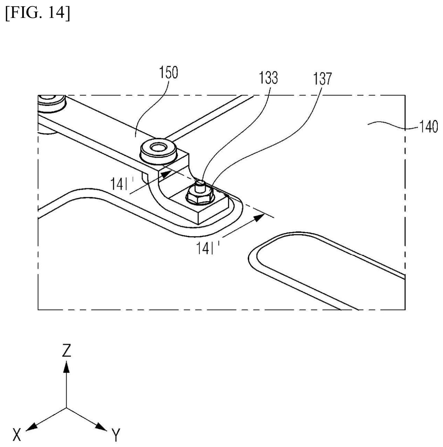

FIG. 14 is an enlarged partial perspective view of a part POR13 of FIG. 13.

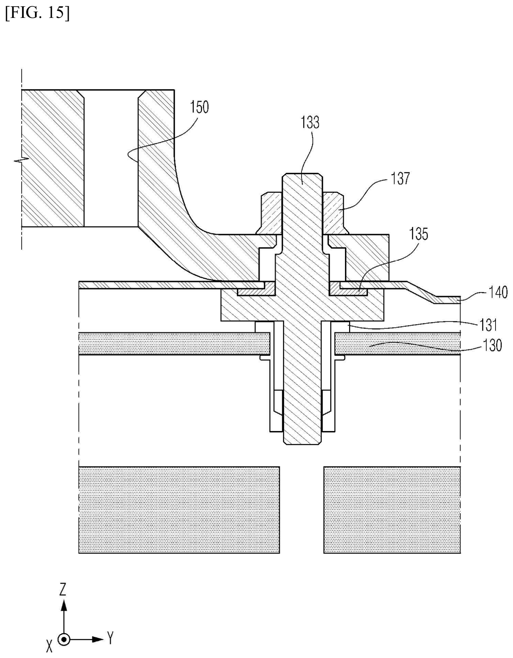

FIG. 15 is a cross-sectional view taken along line 14I-14I' of FIG. 14.

Referring to FIGS. 1 to 5, in P110, battery cell assemblies may be provided on a lower frame.

A lower frame 110 may provide a space for mounting battery cell assemblies 120 to be described below. The lower frame 110 may include a base plate 111 and first to fourth side walls 112, 113, 114 and 115. A plurality of cross beams 130 may be provided on the lower frame 110.

Two directions substantially parallel to an upper surface 111U of the base plate 111 are defined as an X-axis direction and a Y-axis direction, and a direction substantially perpendicular to the upper surface 111U of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

The base plate 111 may include a plurality of plates. The plurality of plates may be coupled by, for example, friction stir welding. Each of the plurality of plates may include cooling channels, cavities, and a rib. Each of the cooling channels, the cavities, and the rib may extend in the X-axis direction.

The cooling channels may provide a path allowing a cooling fluid to flow therethrough. The cooling channels may be spaced apart from each other in the Y-axis direction. The cooling channels may be arranged in the Y-axis direction. The cavities are empty spaces inside the plurality of plates. Due to the formation of the cavities, the mass of the plurality of plates may decrease and thus energy density of a battery pack 100 of FIG. 13 including the lower frame 110 may improve. The rib may define the cooling channels and the cavities. The rib may surround the cooling channels and the cavities. The rib may maintain airtightness of the cooling channels and the cavities.

A central plate among the plurality of plates may include a center beam CB. The center beam 111CB may protrude from the upper surface 111U of the base plate 111. The center beam 111 CB may extend in the X-axis direction.

The first and second side walls 112 and 113 may be coupled to the base plate 111. The first and second side walls 112 and 113 may be spaced apart from each other in the Y-axis direction with the base plate 111 interposed therebetween. Each of the first and second side walls 112 and 113 may include a plate part coplanar with the base plate 111, a wall part perpendicular to the plate part, and a wing part outside the wall part. The wall part of each of the first and second side walls 112 and 113 may be substantially perpendicular to the Y-axis direction. The wing part of each of the first and second side walls 112 and 113 may include a plurality of coupling holes. The wing part of each of the first and second side walls 112 and 113 may be used to transport and/or fix the lower frame 110 (e.g., to fix the lower frame 110 to a vehicle or another battery tray).

The third and fourth side walls 114 and 115 may be coupled to the base plate 111. The third and fourth side walls 114 and 115 may be on the base plate 111. The third and fourth side walls 114 and 115 may be spaced apart from each other in the X-axis direction. The third and fourth side walls 114 and 115 may be substantially perpendicular to the X-axis direction. The third side wall 114 may include a plurality of exhaust holes for installing exhaust devices.

The plurality of battery cell assemblies 120 may be on the base plate 111 of the lower frame 110. The base plate 111 may support the plurality of battery cell assemblies 120. The first to fourth side walls 112, 113, 114, and 115 may horizontally surround the plurality of battery cell assemblies 120. The first to fourth side walls 112, 113, 114, and 115 may protect the plurality of battery cell assemblies 120.

According to example embodiments, the battery pack 100 of FIG. 13 may be of a moduleless type and each of the plurality of battery cell assemblies 120 may not include a module frame. Each of the plurality of battery cell assemblies 120 may include a cell stack 121 and a top cover 127.

The cell stack 121 may include a plurality of banks connected to each other in series. Each of the plurality of banks may include one or more battery cells connected in parallel. The number of banks connected in series and the number of battery cells connected in parallel may be determined according to a voltage and a current to be output from each of the plurality of battery cell assemblies 120.

The battery cells are basic units of a lithium ion battery, i.e., a secondary battery. Each of the battery cells includes an electrode assembly, an electrolyte, and a case. Each of the battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

According to example embodiments, the cell stack 121 may further include a plurality of separators. The plurality of separators may horizontally support the plurality of battery cells to prevent swelling of the plurality of battery cells. According to example embodiments, the plurality of separators may be thermal barriers. According to example embodiments, each of the plurality of separators may have high melting temperature and low thermal conductivity. According to exemplary embodiments, each of the plurality of separators may include a flame retardant material such as a ceramic and a coated glass material. According to example embodiments, the plurality of separators may be configured to emit a fire retarding material and a fire extinguishing agent when a thermal runaway event occurs.

The top cover 127 may be on the cell stack 121. The top cover 127 may include, for example, an insulating material. The top cover 127 may cover the cell stack 121.

The cross beams 130 may isolate the plurality of battery cell assemblies 120 from each other. The cross beams 130 may be interposed between the plurality of battery cell assemblies 120. The plurality of battery cell assemblies 120 may be spaced apart from each other in the X-axis direction with the cross beams 130 interposed therebetween. The cross beams 130 may extend in the Y-axis direction.

Each of the cross beams 130 may include a plurality of openings 130OP. First fixing parts 131 may be coupled to the plurality of openings 130OP. Each of the first fixing parts 131 may include a flange 131F and a modified flange 131DF. Each of the first fixing parts 131 may be a blind nut. Each of the first fixing parts 131 may be coupled to a corresponding one of the cross beams 130. Each of the first fixing parts 131 may be partially buried in the corresponding one of the cross beams 130. The modified flange 131DF may be formed in a process of coupling each of the first fixing parts 131 to the rib of a corresponding one of the cross beams 130. The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. Technicians of ordinary skill in the art will be able to easily derive the plurality of battery cell assemblies 120 arranged in an MxN array (here, M and N are each an integer of 2 or more), based on the above description.

The center beam 111CB may isolate the plurality of battery cell assemblies 120 in the Y-axis direction. The center beam 111CB may be interposed between the plurality of battery cell assemblies 120. The center beam 111CB may be interposed between the cross beams 130. Some of the cross beams 130 may be spaced apart from some of the other cross beams 130 in the Y-axis direction with the center beam 111CB interposed therebetween.

Next referring to FIGS. 1 and 6 to 9, in P120, second fixing parts 133 may be coupled to the first fixing parts 131.

The second fixing parts 133 may be, for example, bidirectional bolts. Each of the second fixing parts 133 may include a first shank 133S1, a flange portion 133F, a hexagonal portion 133H, and a second shank 133S2.

The first shank 133S1 may have a roughly cylindrical shape. Each of the second fixing parts 133 may further include an adhesive 133A applied to the first shank 133S1.

The flange portion 133F may have a roughly disk shape. A diameter of the flange portion 133F may be greater than a diameter of the first shank 133S1. The flange portion 133F may be connected to the first shank 133S1. The flange portion 133F may include a groove 133G. A corresponding one of gaskets 135 may be in the groove 133G of the flange portion 133F of each of the second fixing parts 133. A height of each of the gaskets 135 may be greater than a depth of the groove 133G.

The hexagonal portion 133H may have a roughly hexagonal column shape. The hexagonal portion 133H may be connected to the flange portion 133F. The hexagonal portion 133H may be spaced apart from the first shank 133S1 with the flange portion 133F interposed therebetween.

The second shank 133S2 may have a roughly cylindrical shape. A diameter of the second shank 133S2 may be less than the diameter of the flange portion 133F. The second shank 133S2 may be connected to the hexagonal portion 133H. The second shank 133S2 may be spaced apart from the flange portion 133F with the hexagonal portion 133H interposed therebetween.

Next, referring to FIGS. 1 and 10 to 12, in P130, a lid 140 may be provided. The lid 140 may be coupled to the lower frame 110. The lid 140 may be coupled to the first to fourth side walls 112, 113, 114, and 115 of the lower frame 110. The gaskets 135 may be interposed between the flange portion 133F and the lid 140 of a corresponding one of the second fixing parts 133. Accordingly, the gaskets 135 may be pressed by the lid 140 and thus a liquid seal may be provided to an inner space defined by the lid 140 and the lower frame 110.

Thereafter, referring to FIGS. 1 and 13 to 15, in P140, a center bracket 150 may be provided. The center bracket 150 may be fixed by the second and third fixing parts 133 and 137. The center bracket 150 may be in contact with corresponding ones of the second and third fixing parts 133 and 137. The center bracket 150 may include a portion interposed between the second and third fixing parts 133 and 137.

The battery pack 100 may be provided by providing and coupling the center bracket 150 to the lid 140. The battery pack 100 may include the lower frame 110, the plurality of battery cell assemblies 120, the first to third fixing parts 131, 133 and 137, the gaskets 135, the lid 140, and the center bracket 150.

The center bracket 150 may be on the lid 140. The center bracket 150 may be in contact with the lid 140. The center bracket 150 may fix the lid 140. The center bracket 150 may press the lid 140. The center bracket 150 may extend in the Y-axis direction. The center bracket 150 may overlap the center beam 111CB. The center bracket 150 may be coupled to the second fixing parts 133.

A first end of the center bracket 150 may be fixed to a first cross beam via the first to third fixing parts 131, 133, and 137, and a second end thereof may be fixed to a second cross beam via the first to third fixing parts 131, 133, and 137. The first and second cross beams may be included in the cross beams 130. The first and second cross beams may be spaced apart from each other with the center beam 111 CB therebetween and overlap each other in the Y-axis direction. The first cross beam may be interposed between the center beam 111CB and the first side wall 112, and the second cross beam may be interposed between the center beam 111CB and the second side wall 113.

Battery cell assemblies 120 that are adjacent to the first cross beam (i.e., that are spaced apart from each other with the first cross beam therebetween) will be referred to as first and second battery cell assemblies, and battery cell assemblies 120 that are adjacent to the second cross beam (i.e., that are spaced apart from each other with the second cross beam therebetween) will be referred to as third and fourth battery cell assemblies.

According to example embodiments, the center bracket 150 may be fixed by the first fixing part 131 coupled to the cross beams 130, the second fixing parts 133 coupled to the first fixing parts 131, and the third fixing parts 137 coupled to the second fixing parts 133. Accordingly, the occupying of the inner space of the battery pack 100 by fixing parts for fixing the center bracket 150 may be prevented (or mitigated or minimized), and the energy density (e.g., volume density) of the battery pack 100 may be improved.

The battery pack 100 may further include a plurality of exhaust devices. The plurality of exhaust devices may be coupled to, for example, the third side wall 115. The plurality of exhaust devices may be coupled to, for example, exhaust holes of the third side wall 115. Each of the plurality of exhaust devices may include a spring type or rupture disk. Each of the plurality of exhaust devices may be configured to emit a gas from the inside of the battery pack 100 when inner pressure of the battery pack 100 exceeds a threshold.

The plurality of exhaust devices may be configured to delay thermal propagation by discharging a high-temperature gas from the inside of the battery pack 100 to the outside when at least one of the plurality of battery cell assemblies 120 is in a thermal runaway state.

Here, the thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include electronic components. The electronic components may be installed in the lower frame 110. The electronic components may be provided between the third side wall 113 on which the exhaust devices are installed and the plurality of battery cell assemblies 120. The electronic components may include an electronic device required to drive a battery pack.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a lower frame including a base plate and side walls;
first to fourth battery cell assemblies provided on the lower frame and each including a plurality of battery cells;
a first cross beam interposed between the first and second battery cell assemblies, wherein the first and second battery cells are spaced apart from each other in a first direction;
a second cross beam interposed between the third and fourth battery cell assemblies, wherein the third and fourth battery cell assemblies are spaced apart from the first and second battery cell assemblies in a second direction perpendicular to the first direction;
first fixing parts coupled to the first cross beam and spaced apart from the base plate; and
second fixing parts coupled to the first fixing parts.

2. The battery pack of claim 1, further comprising a lid coupled to the side walls.

3. The battery pack of claim 2, further comprising gaskets between the second fixing parts and the lid.

4. The battery pack of claim 3, wherein each of the second fixing parts includes a flange, wherein the flange includes a groove with a depth less than height of each of the gaskets, and the gaskets are in the groove.

5. The battery pack of claim 2, further comprising a center bracket on the lid.

6. The battery pack of claim 5, wherein the center bracket is coupled to the second fixing parts.

7. The battery pack of claim 5, further comprising third fixing parts coupled to the second fixing parts while being in contact with the center bracket.

8. The battery pack of claim 5, wherein a first end of the center bracket is fixed on the first cross beam, and a second end of the center bracket is fixed on the second cross beam.

9. The battery pack of claim 5, wherein the lid is fixed by the center bracket.

10. The battery pack of claim 5, further comprising a center beam between the first and second battery cell assemblies, wherein the center beam overlaps the center bracket.

11. The battery pack of claim 10, wherein the center beam is perpendicular to the center bracket.

12. The battery pack of claim 1, wherein each of the second fixing parts includes:
a first shank;
a flange portion with a diameter greater than a diameter of the first shank;
a hexagonal portion spaced apart from the first shank with the flange portion between the hexagonal portion and the shank; and
a second shank spaced apart from the flange portion with the hexagonal portion between the second shank and the flange portion.

13. The battery pack of claim 12, wherein each of the second fixing parts further includes an adhesive applied to the first shank.

14. The battery pack of claim 12, wherein the first shank of each of the second fixing parts is coupled to a corresponding one of the first fixing parts.
